# FASCICULE DE BREVET EUROPEEN

(11) **EP 0 909 433 B1**
(45) Date de publication et mention de la délivrance du brevet: **10.12.2003**
(21) Numéro de dépôt: 97924065.2
(22) Date de dépôt: 07.05.1997
(51) Int. Cl.: G07F 7/10

(54) **PROCEDE DE REALISATION D'UNE TRANSACTION ELECTRONIQUE SECURISEE A DOUBLE SIGNATURE**
VERFAHREN ZUM DURCHFÜHREN EINER MIT DOPPELTER UNTERSCHRIFT GESICHTERTEN ELEKTRONISCHEN TRANSAKTION
METHOD FOR PERFORMING A DOUBLE-SIGNATURE SECURE ELECTRONIC TRANSACTION

(30) Priorité: 07.05.1996 FR 9605706
(43) Date de publication de la demande: 21.04.1999
(73) Titulaire: FRANCE TELECOM, 75015 Paris (FR); LA POSTE, 92777 Boulogne Billancourt Cédex (FR)
(72) Inventeur: PAILLES, Jean-Claude, F-14610 Epron (FR); GIRAULT, Marc, F-14000 Caen (FR); REMERY, Patrick, F-14000 Caen (FR)
(74) Mandataire: Poulin, Gérard
(86) Numéro de dépôt international: FR9700826
(87) Numéro de publication internationale: WO97042610

(56) Documents cités:
- EP-A- 0 172 670
- EP-A- 0 363 122
- EP-A- 0 496 656
- EP-A- 0 588 339
- WO-A-93/08545
- GB-A- 2 261 538

## Description

### Domaine technique

La présente invention a pour objet un procédé de réalisation d'une transaction électronique sécurisée à double signature.
L'invention trouve une application dans tous les cas où des terminaux ont à traiter, de façon sécurisée, des transactions avec des utilisateurs munis de cartes à puce, ces terminaux n'étant pas en connexion permanente avec des systèmes de traitement centralisés, mais seulement périodiquement, lors de la collecte des transactions effectuées depuis la dernière collecte.

### Etat de la technique antérieure

Pour faciliter l'exposé, l'exemple sera pris des transactions liées au paiement électronique et notamment à ce qu'il est convenu d'appeler le "porte-monnaie électronique", ou PME en abrégé. Pour ces techniques, on pourra se reporter à la revue "L'Echo des Recherches", numéro spécial 158, 4ème trimestre 1994, consacré au paiement électronique. Dans ce numéro, on pourra se reporter plus spécialement à l'article intitulé "Signature électronique et application au paiement électronique" par Marc GIRAULT et Luc VALLEE.

La technique du PME se développe depuis quelques années, mais la sécurité de ce genre d'applications pose encore des problèmes et suscite donc encore des recherches. Différentes solutions sont possibles, qui peuvent être analysées sous l'angle du rapport sécurité/coût.
On peut rappeler que, dans ce type de systèmes, une carte porte-monnaie contient un solde (ou balance), c'est-à-dire une certaine quantité de valeurs (monnaie, jetons, unités de consommation) et que, lors d'un paiement d'un montant m, ce solde est diminué de m unités ; la carte produit une preuve du débit de m unités, qui constitue une garantie de paiement du commerçant possédant le terminal (ou serveur), sur lequel l'utilisateur effectue la transaction. Cette preuve va conditionner le paiement du commerçant en monnaie normale, par l'autorité ayant émis les porte-monnaie électroniques, autorité que l'on peut appeler "la banque".
Cette preuve doit être vérifiée de façon à éviter des fausses cartes : il ne doit pas être possible de créer de toute pièce (c'est-à-dire sans carte) une preuve susceptible d'être reconnue comme étant authentique. Cette preuve doit aussi éviter des manipulations, telles que la transformation d'un montant m en un montant m' supérieur à m, ou la réutilisation de la même preuve pour payer par exemple deux fois le montant dû au commerçant, ou payer de façon indue d'autres commerçants.
Dans la suite de la description, on désignera les différents acteurs de ces systèmes respectivement par "utilisateur", "prestataire" et "banque". L'utilisateur possède donc une carte PME pour payer un prestataire. La banque est l'entité qui émet les PME.

Les techniques utilisées aujourd'hui peuvent être classés schématiquement en trois catégories, selon qu'elles utilisent des signatures à clé secrète, à clé publique ou à clés interactives.
Pour ce qui est des premières, on peut distinguer le cas où le terminal est déconnecté de la banque (autrement dit est autonome, ou en terminologie anglo-saxonne, "offline") du cas où le terminal est connecté directement à la banque. Le premier cas (déconnecté ou "offline") est le plus courant dans les différents systèmes de porte-monnaie existants. Il consiste à calculer la preuve z avec un algorithme à clé secrète f, sur le paramètre i représentant le numéro de la carte PME, et sur un paramètre M, qui désigne l'ensemble des paramètres suivants :
- m :: le montant de la transaction ;
- j :: le numéro du module de sécurité (appelé généralement "Secure Application Module" ou SAM en abrégé) ;
- r :: un aléa ou plus simplement le contenu d'un compteur.
On a donc z=f(k,m,j,r) où k est la clé secrète du PME d'identité i, clé qui dépend de i par un mécanisme de diversification des clés selon le numéro i de carte. Le module SAM est une carte à puce située dans le terminal, qui joue le rôle de caisse enregistreuse sûre et protégée grâce aux qualités de sécurité physique des cartes à puce utilisées. Ce module SAM contrôle donc le certificat z et accumule les montants. Il est régulièrement vidé pour que le prestataire fasse enregistrer ses gains auprès de la banque, grâce à une procédure sécurisée entre le module SAM et la banque, qui n'offre pas de difficultés particulières et qui ne sera donc pas décrite ici.
Pour contrôler le certificat z, le module SAM doit connaître les clés de toutes les cartes PME , ce qui, en pratique, est obtenu en calculant les clés k des PME par une formule de diversification k=g(KM,i), où KM est une clé maître, valable pour tout le système, et qui est dans tous les modules SAM.

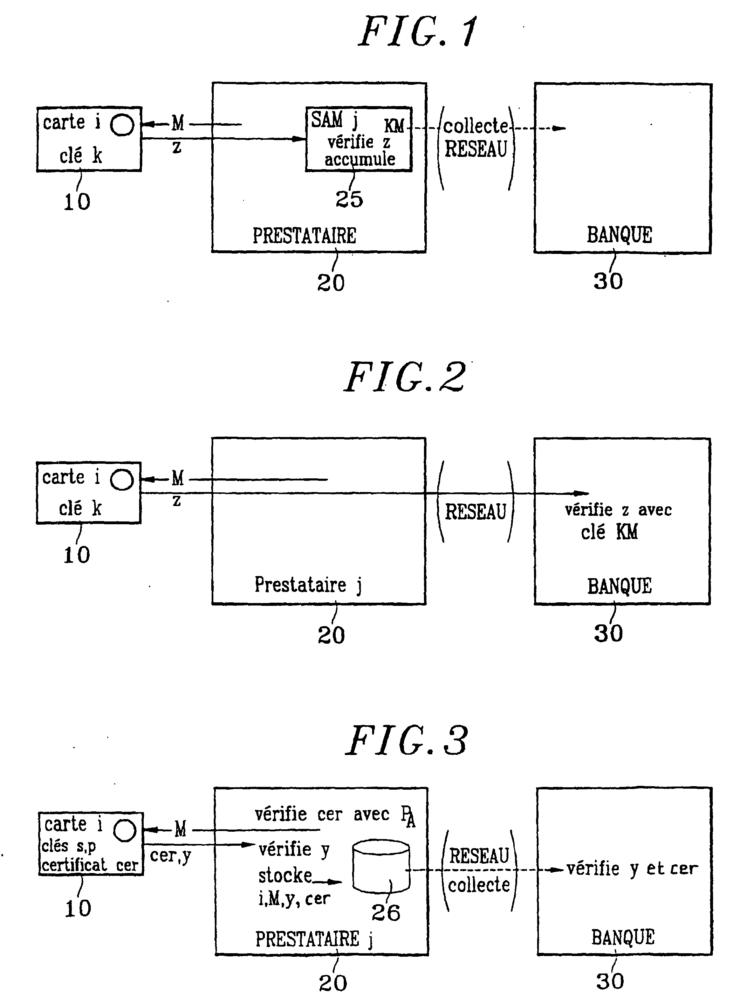

Ce mode de mise en oeuvre est illustré sur la figure 1 annexée où la carte PME de l'utilisateur porte la référence 10, le terminal du prestataire la référence 20, avec son module SAM 25, et la banque la référence 30. La flèche dirigée du terminal 20 vers la carte 10 représente la transmission des paramètres M vers la carte et la flèche dirigée en sens contraire représente la transmission du certificat z vers le terminal.
Ce premier mode de mise en oeuvre présente l'avantage de conduire à des cartes de coût faible. Mais il présente quelques inconvénients :
- la sécurité est liée à l'impossibilité de lire dans le module SAM la clé maître KM, donc sur la sécurité physique des modules SAM, lesquels sont très répandus puisque situés dans tous les terminaux. Or, cette sécurité est difficile à garantir. La connaissance de la clé maître KM permettrait de réaliser des fraudes de grande ampleur, en fabriquant des cartes de numéro i quelconque, qu'aucun mécanisme de liste noire ne permettrait de stopper ;
- les modules SAM sont situés dans les terminaux, ou chez les serveurs, ce qui pose des problèmes pratiques lorsqu'il faut accepter plusieurs types de cartes PME, avec chacune leur SAM ; c'est le cas, très répandu dans la pratique, où il n'y a pas qu'une seule banque mais plusieurs, susceptibles d'émettre leurs propres cartes PME.

Pour ce qui est maintenant du cas où le terminal du prestataire est connecté à la banque ("online"), le module de sécurité SAM n'existe plus dans le terminal, et le contrôle du certificat doit se faire dans la banque. Cette solution est illustrée sur la figure 2 annexée avec les mêmes références que sur la figure 1.
Cette solution n'est pas très intéressante en pratique, car elle entraîne des coûts de télécommunication importants. Or, un porte-monnaie électronique doit rester un moyen de paiement rentable, même pour des transactions portant sur de très petits montants.

Pour ce qui est maintenant des systèmes utilisant un procédé de signature avec algorithme à clé publique, on peut encore distinguer deux cas selon que l'on utilise ou non un module de sécurité SAM.
Si l'on n'utilise pas de module SAM, le certificat z des systèmes précédents utilisant des clés sécrètes est remplacé par une signature basée sur un algorithme à clé publique tel que l'algorithme RSA ("Rivest-Shamir-Adleman"). Chaque carte possède un couple de clés sécrète et publique, respectivement s et p, et la preuve du débit défini par le paramètre M est obtenue par le calcul d'une signature y=s(M).
Cette signature peut être vérifiée par le prestataire, en utilisant la clé publique. Toutes les signatures peuvent être stockées, puis collectées périodiquement pour faire enregistrer les paiements par la banque. Dans ce type de réalisation, il faut aussi que la clé publique p soit certifiée par l'autorité qui émet les cartes, car le fait de posséder un couple de clés s et p ne prouve pas qu'il s'agisse d'une carte PME authentique : il est en effet facile de trouver de tels couples avec, par exemple, des logiciels sur calculateur personnels adaptés. Il faut donc que le PME transmette au terminal non seulement sa clé publique p, mais aussi un certificat lié à la clé publique p. Dans la suite, on notera "cer" ce certificat. Le certificat "cer" est vérifié avec la clé publique PA de la banque.

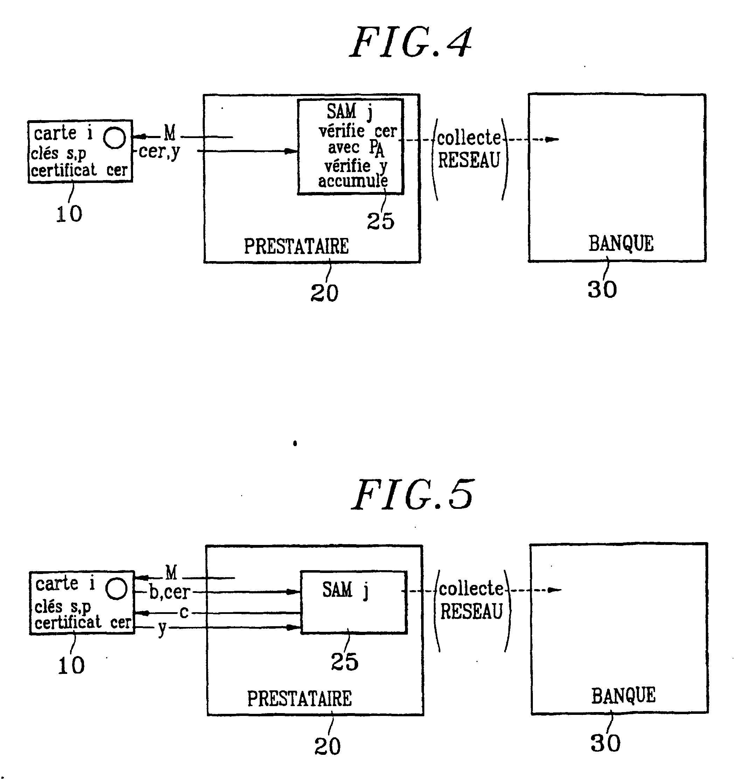

La figure 3 annexée illustre cette variante. Les références sont les mêmes, mais on note, dans le terminal 20 du prestataire, un moyen de collecte (ou de mémorisation) 26 capable de stocker les numéros des cartes i, les paramètres M, les certificats cer et les signatures y.
L'avantage de ce système tient à ce qu'il n'existe plus de clé maître secrète dans les terminaux, avec les risques que cela comportait, ni de modules SAM. Le système est donc plus sûr et présente une meilleure flexibilité.
Mais ce système présente des inconvénients :
- le coût des cartes capables de faire des calculs fondés sur des algorithmes à clé publique de type RSA est élevé, car la puissance de calcul nécessaire, à temps de réponse donné, est importante ;
- la quantité de données à mémoriser dans le terminal et à collecter est importante : en effet, par transaction, il faut mémoriser M, et y ; cet ensemble de données représente, avec les longueurs courantes de clés publiques (512 bits, un ensemble de l'ordre de 1,5 kbits.

Dans la variante avec module de sécurité SAM, on accumule les transactions dans le terminal et on les fait collecter ensuite par la banque. L'opération d'accumulation étant sensible du point de vue sécurité, puisqu'une fraude tentante serait de modifier chez le prestataire le montant accumulé, il est nécessaire d'avoir un module SAM qui vérifie les signatures des transactions et les accumule.

La figure 4 annexée illustre cette variante avec les mêmes références.
L'avantage de cette variante tient à ce qu'il n'y a plus de clé maître secrète dans le terminal, ce qui conduit à une meilleure sécurité. Mais des inconvénients demeurent, qui sont doubles :
- le coût des cartes capables de faire des calculs fondés sur des algorithmes à clé publique est élevé, car la puissance de calcul nécessaire, à temps de réponse donné, est importante,
- il est nécessaire d'utiliser un module SAM.

La troisième catégorie de procédés concerne les procédés utilisant des schémas de signature interactive. L'utilisation de cette technique permet de réduire considérablement la puissance de calcul nécessaire dans les cartes : le rapport est de 10 à 20 avec les paramètrages couramment utilisés. A puissance de calcul identique, les temps de réponse sont donc meilleurs. A temps de réponse identique, le coût des composants des cartes PME est moins élevé.
On utilise en général deux types de schémas d'authentification, l'un dit de GUILLOU-QUISQUATER (ou GQ en abrégé), l'autre dit de FIAT-SHAMIR (ou FS en abrégé). Le numéro de l'Echo des Recherches cité plus haut contient toutes les références bibliographiques à ce sujet.
On rappelle brièvement en quoi consiste un schéma de signature de ce type en prenant un exemple emprunté au schéma GQ. Dans ce schéma, la carte, notée Ci, utilise les fonctions ou paramètres suivants :
- g :: fonction d'expansion de 64 en 512 bits,
- h :: fonction de hâchage ("hashing") : résultat sur 64 bits,
- * :: opération de restriction à 128 bits poids faible,
- S_{A} et P_{A} :: clés secrète et publique de l'autorité : 768 bits,
- i :: identité de la carte, sur 64 bits,
- I :: g(i)
- n :: module sur 512 bits,
- cer :: S_{A}(i,n,e) sur 768 bits,
- e :: nombre premier à 16 bits,
- v :: 1/I^{1/e} mod n, sur 512 bits.

Le terminal sécurisé Tj possède la clé publique P_{A}, g, h et est identifié par j, sur 64 bits.
Les opérations mises en oeuvre sont alors les suivantes :
1) le terminal fixe le montant m de la transaction, tire un aléa r et constitue le paramètre M rassemblant m, j et r, et transmet M à la carte ;
2) la carte vérifie que son solde (ou balance) est supérieur au montant m de la transaction ; si c'est le cas, la carte tire un aléa x, calcule t=x^{e} mod n et b=h(t*,M) et transmet au terminal i, b et le certificat cer=S_{A}(i,n,e) ;
3) le terminal vérifie le certificat et obtient i, n et e, choisit un nombre c aléatoire inférieur à e et envoie c à la carte ;
4) la carte calcule y=xv^{c} mod n et réduit son solde de m et transmet au terminal y et t* ;
5) le terminal calcule I=g(i), calcule la quantité u= (y^{e}I^{c} mod n)* puis h(u,M) et vérifie que b est égal à h(u,M) ; alors le terminal augmente son solde de m.
   On peut résumer ce schéma à l'essentiel de la manière suivante :
   - la carte choisit un aléa x, calcule t=x^{e} modulo n et envoie au terminal b=h(M,t),
   - le terminal choisit alors un aléa c tel que 0<c<e et l'envoie à la carte,
   - la carte répond alors par y=xv^{c} modulo n,
   - le terminal vérifie alors que si u=y^{e}I^{c}, alors b=h(M,u) (car v^{e}I=l mod n).

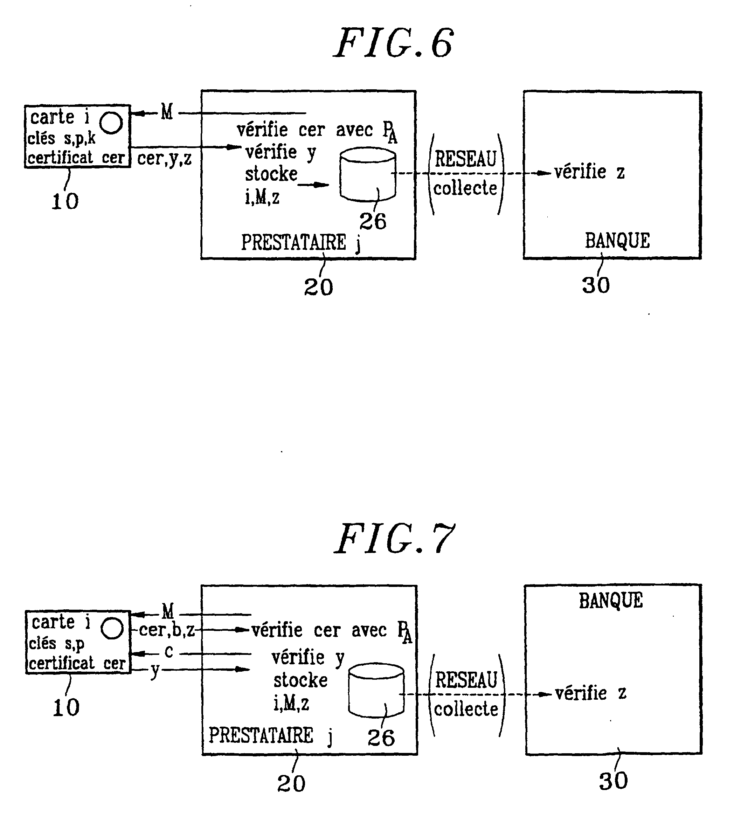

Ce schéma est illustré sur la figure 5 annexée. Son intérêt réside dans le fait que la puissance de calcul requise est inférieure au cas des schémas de type RSA. Mais un inconvénient subsiste, car ce schéma nécessite un module SAM. En effet, la signature interactive n'a de valeur que si l'on est sûr que l'aléa c a bien été soumis à la carte et dans l'ordre indiqué. Les signatures interactives sont dites, pour cette raison, jetables : elles ne sont utilisables qu'au moment où elles sont obtenues. En effet, la signature interactive comprend les données M, cer, b, c, y. Or, il est facile de créer ces données de toute pièce : connaissant cer et M, on a p et i, et il suffit de choisir y et c et de calculer t=y^{e}I^{c} et b=h(M,t) ; les données obtenues M, cer, b, c, y constituent une signature valide.
EP-A-0 363 122 décrit un système d'authentification pour transaction électronique. Ce système comprend un terminal et une carte contenant tous deux des moyens de mémorisation de données propres aux transactions. Si la transaction est légitime, les données mémorisées dans la carte correspondent aux données mémorisées dans le terminal.
GB-A-2 261 538 décrit un système d'authentification pour transaction électronique avec un terminal et une carte. La carte comprend un processeur qui incrémente une donnée de transaction à chaque utilisation et qui signe cette donnée.

### Exposé de l'invention

A cette fin, l'invention propose un procédé à double signature, l'une du type à clé publique ou secrète (notée y dans les schémas précédents), l'autre basée sur un algorithme à clé secrète (notée z dans les schémas précédents). Cette double signature est conçue de façon à combiner les avantages des deux techniques et implique donc une combinaison judicieuse de ces signatures et des éléments signés, de façon à conduire. effectivement aux avantages recherchés.

Comme il a été expliqué plus haut, dans un schéma de signature de type RSA, la preuve du débit de la carte est obtenue par le calcul de la signature y=s(M) et cette signature peut être vérifiée par le prestataire, sans que celui-ci ait à contenir de secrets (il travaille avec la clé publique). C'est ce qui est illustré sur la figure 3.
Dans un schéma de signature à clé secrète, la preuve z est obtenue par un algorithme à clé secrète en calculant z=f(k,m,j,r) où k est la clé secrète et, dans la variante sans SAM, z n'est pas vérifiable par le prestataire mais seulement par la banque. Cette preuve z, avec i et M, doit être stockée par le prestataire puis collectée par la banque.
Selon l'invention, on combine ces deux schémas de telle sorte que la signature y, que le prestataire peut vérifier, dépende de la signature z, non vérifiable par le prestataire. On a ainsi y=s(M,z) au lieu de y=s(M). Ainsi, une modification de z en z' par l'utilisateur nécessiterait de modifier y en y'=s(M,z') ce qui est impossible puisque la fonction s n'est connue que de la carte.
Dans un schéma de signature interactive, au lieu de calculer dans la carte la fonction b=h(M,t) comme expliqué plus haut, avec t=x^{e} mod n, on calculera une fonction b qui inclut la preuve z, soit b=h(M,t,z). Si z est modifié par l'utilisateur en z', alors le logiciel du prestataire s'en apercevra. En effet, t n'est dévoilé (indirectement) qu'à la fin de l'échange. L'utilisateur ne peut donc calculer b'=h(M,t,z') au moment où b' devrait être envoyé au prestataire.

De manière précise, l'invention a donc pour objet un procédé de réalisation d'une transaction électronique entre un utilisateur possédant une carte, un prestataire possédant un terminal apte à recevoir cette carte et un système centralisé apte à être connecté périodiquement au terminal, procédé dans lequel :
- le terminal transmet à la carte un paramètre comprenant au moins le montant de la transaction,
- la carte débite son solde dudit montant,
- la carte et le terminal calculent et échangent diverses données dont certaines sont signées par la carte au moyen d'un algorithme à clé publique ou secrète,
- le terminal vérifie les données signées par ledit algorithme à clé publique ou secrète et stocke les paramètres propres aux diverses transactions réalisées,
- le système centralisé collecte périodiquement les données stockées lorsqu'il est connecté au terminal et crédite le prestataire des montants correspondants,
ce procédé étant caractérisé par le fait qu'il est à double signature, les donnés signées par la carte à l'aide de l'algorithme à clé publique ou secrète comportant une preuve z que le débit de la carte a été effectué, cette preuve z étant une fonction du paramètre M et d'une clé secrète de débit, le terminal stockant ainsi, en outre, les diverses preuves des diverses transactions effectuées mais ne pouvant vérifier ces preuves, le système centralisé collectant, en outre, ces preuves et les vérifiant à l'aide de la clé secrète de débit, et ne créditant le prestataire qu'en cas de vérification positive.
Si le paiement est fait en ligne avec un serveur prestataire, l'algorithme peut être à clé secrète.

### Brève description des dessins

- la figure 1, déjà décrite, illustre un schéma connu de signature avec algorithme à clé secrète avec terminal déconnecté ;
- la figure 2, déjà décrite, illustre un schéma connu de signature avec algorithme à clé secrète avec un terminal connecté à la banque ;
- la figure 3, déjà décrite, illustre un schéma connu de signature avec algorithme à clé publique sans module de sécurité ;
- la figure 4, déjà décrite, illustre un schéma connu de signature avec algorithme à clé publique avec module de sécurité ;
- la figure 5, déjà décrite, illustre un schéma connu de signature interactive ;
- la figure 6 illustre un premier mode de mise en oeuvre de l'invention dans le cas d'un schéma de signature de type à clé publique ;
- la figure 7 illustre un second mode de mise en oeuvre de l'invention dans le cas d'un schéma de signature interactive.

### Exposé détaillé d'un mode de mise en oeuvre

On va décrire, à titre d'exemple, un mode de mise en oeuvre fondé sur une signature interactive. Les notations seront les suivantes :
- g :: fonction d'expansion 48 en 512 bits ;
- h :: fonction de hâchage : résultat 128 bits ;
- f :: fonction de calcul de signature à clé secrète (comme DES par exemple) : 64 bits ;
- * :: restriction à k.64 bits de poids faible; k paramètrable de 4 à 8 ;
- S_{A} et P_{A} :: clés secrète et publique de l'autorité : 768 bits.

Les données contenues dans la carte sont les suivantes :
- i :: identité de la carte : 48 bits
- I :: g(i)
- n :: module sur 512 bits
- cer :: S_{A}(i,n,e) : certificat de 768 bits
- e :: 2¹⁶+1
- v :: 1/I^{1/e} mod n : 512 bits
- k :: clé secrète de débit, 64 bits
- bal :: solde de la carte : 32 bits
h, f.

Les données contenues dans le terminal du prestataire sont les suivantes :
P_{A},g,h
- j :: identité du terminal : 48 bits
- m :: montant : 16 bits
- r :: contenu du compteur : 32 bits

Les opérations successives sont alors les suivantes :
1) Le terminal du prestataire fixe le montant m de la transaction et constitue M à l'aide de m, j et le contenu r du compteur, et fait passer à r+1 ce contenu ; le prestataire transmet M à la carte.
2) La carte vérifie que le solde n'est pas inférieur au montant m. Si c'est bien le cas, la carte choisit un aléa x de 512 bits, calcule t=x^{e} mod n, calcule la preuve z à l'aide de la clé secrète de débit k, soit z=f(k,M), calcule également b=h(t*,M,z), débite le solde du montant m, enregistre M ; la carte possède le certificat de l'autorité cer=S_{A}(i,n,e) où S_{A} est la clé secrète de l'autorité; la carte transmet finalement au terminal du prestataire la preuve z, la fonction f et le certificat cer.
3) Le terminal du prestataire vérifie le certificat cer à l'aide de la clé publique de l'autorité P_{A} et obtient n, e, et i ; il choisit un nombre c aléatoire appelé aussi challenge, sur 16 bits et transmet c à la carte.
4) La carte calcule y=xv^{c} mod n et transmet y au terminal du prestataire.
5) Le terminal du prestataire calcule I=g(i), puis u=(y^{e}I^{c} mod n)* ; il vérifie que b est égal à h(u,M,z) et si c'est le cas valide la transaction. Ce terminal collecte i, M et z et envoie ces données à la banque.
6) La banque, avec i, retrouve la clé secrète de débit k et vérifie la preuve z=f(k,M). La banque vérifie que le compteur r du terminal du prestataire j progresse et si c'est le cas crédite le compte du prestataire j du montant m.

Ce schéma peut être modifié en rendant la signature interactive non jetable et cela en changeant z=f(k,M) en z=f(k,M,t*). La méthode de création d'une signature interactive (i,M,cer,y,z) décrite plus haut ne fonctionne alors plus : on choisit y, c et M ; on calcule t*=(y^{e}I^{c} mod n)* ; on calcule b=h(t*,M, z) mais t ne satisfera pas à z=f(k,M,t*). Les données i, M, z, t*, b, c, y ont alors à être mémorisées chez le prestataire.

Le niveau de sécurité du protocole précédent est lié à la taille du challenge c : par exemple, si c fait 16 bits, il y a une chance sur 2¹⁶=65536 pour qu'un émulateur de cartes, en dévinant c, puisse créer artificiellement une transaction. Le temps de calcul de la carte est aussi directement proportionnel à ce niveau de sécurité. Le niveau de sécurité peut être adapté en faisant varier la longueur du nombre aléatoire c transmis par le terminal à la carte dans le cas de la signature interactive. Un perfectionnement consiste donc à faire en sorte que le prestataire ajuste le niveau de sécurité en fonction de paramètres tels que le montant de la transaction, la possibilité d'avoir des utilisateurs avec des fausses cartes, bien plus importante pour du télépaiement que du paiement de contact, etc...
On voit après cette description que le procédé de l'invention présente de nombreux avantages :
- il est peu consommateur de puissance de calcul : donc, à performances égales, les cartes PME seront moins chères, ou, à puissance égale, la vitesse sera plus grande,
- il est utilisable sans module SAM chez les prestataires,
- il minimise la quantité de mémoire de stockage chez le prestataire (rapport 5 à 10),
- il réduit dans les mêmes proportions la quantité d'informations à transporter du prestataire à la banque,
- il est utilisable avec un module SAM, s'il est jugé préférable d'accumuler les transactions chez le prestataire, mais ce module SAM ne contenant pas de clés secrètes, est peu sensible,
- il est ajustable en niveau de la sécurité, suivant les caractéristiques des transactions.

On pourrait penser qu'un niveau de sécurité de 2¹⁶ est faible comparé aux niveaux habituels de la cryptographie, où il est courant de prendre des aléas sur 64 voire 512 bits. Il faut cependant noter que, concernant le coût de recherche de la clé (ici v), c'est-à-dire le nombre d'itérations à réaliser pour trouver la clé, à partir d'un couple challenge-réponse, le système proposé a exactement les mêmes caractéristiques de sécurité que les systèmes classiques. Pour mettre à profit ce niveau de sécurité de 2¹⁶, il faudrait, avec une fausse carte, attendre en moyenne 32 000 transactions rejetées avant d'en avoir une acceptée.

## Revendications

1. Procédé de réalisation d'une transaction électronique entre un utilisateur possédant une carte (10), un prestataire possédant un terminal (20) apte à recevoir cette carte (10) et un système centralisé (30) apte à être connecté périodiquement au terminal (20), procédé dans lequel :
- le terminal (20) transmet à la carte un paramètre (M) comprenant au moins le montant (m) de la transaction,
- la carte (10) débite son solde du montant (m),
- la carte (10) et le terminal (20) calculent et échangent diverses données dont certaines sont signées par la carte au moyen d'un algorithme à clé publique ou secrète,
- le terminal (20) vérifie les données signées par ledit algorithme à clé publique ou secrète et stocke les paramètres propres aux diverses transactions réalisées,
- le système centralisé (30) collecte périodiquement les données stockées lorsqu'il est connecté au terminal et crédite le prestataire des montants correspondants,
ce procédé étant **caractérisé par le fait qu'**il est à double signature, les données signées par la carte (10) à l'aide de l'algorithme à clé publique ou secrète comportant une preuve z que le débit de la carte a été effectué, cette preuve z étant une fonction f(k,M) du paramètre M et d'une clé secrète de débit k, le terminal (20) stockant ainsi, en outre, les diverses preuves z des diverses transactions effectuées mais ne pouvant vérifier ces preuves z, le système centralisé (30) collectant, en outre, ces preuves z et les vérifiant à l'aide de la clé secrète de débit k, et ne créditant le prestataire (20) qu'en cas de vérification positive.

2. Procédé selon la revendication 1, **caractérisé par le fait que** l'une des signatures qu'il utilise est une signature de type RSA et **par le fait que** la carte (10) possède un certificat de l'autorité cer des paramètres (n,e) de la clé publique p et de l'identité i de la carte, et calcule la signature y=s(M,z) et transmet au terminal (20) le certificat cer, la signature y et la preuve z, le prestataire vérifiant cer et y, stockant i,M et z et le système centralisé vérifiant les preuves z.

3. Procédé selon la revendication 1, **caractérisé par le fait que** l'une des signatures qu'il utilise est une signature interactive et qu'il comprend les opérations suivantes :
- la carte (10) possède un certificat de l'autorité cer des paramètres (n, e) de la clé publique et de l'identité i de la carte, choisit un aléa x, calcule t=x^{e} mod n où e et n définissent la clé publique p, calcule la preuve z=f(k,M) à l'aide de la clé secrète de débit k, calcule b=h(t*,M,z) où h est une fonction de hâchage ("hashing") et t* est une restriction de t à des bits de poids faible, et transmet au terminal (20) la preuve z, le nombre b, et le certificat cer,
- le terminal (20) vérifie le certificat cer à l'aide de la clé publique de l'autorité p_{A} et obtient n, e et i, tire un nombre aléatoire c ayant une certaine longueur et transmet c à la carte (10),
- la carte (10) calcule y=xv^{c} mod n où V = 1/I^{1/e} mod n et I = g(i) et transmet y au terminal (20),
- le terminal calcule I=g(i) où g est une fonction d'expansion, calcule la quantité u=(y^{e}I^{c} mod n)* et vérifie que b=h (u, M, z) , et stocke i, M et z,
- le système centralisé vérifie les preuves (z).

4. Procédé selon la revendication 3, **caractérisé par le fait que** le niveau de sécurité de la première signature est adapté en faisant varier la longueur du nombre aléatoire c.

## Patentansprüche

1. Verfahren zur Durchführung einer elektronischen Transaktion zwischen einem Benutzer, der eine Karte (10) besitzt, einem Dienstleister, der ein Endgerät (20) besitzt, welches diese Karte (10) aufnehmen kann, und einem zentralisierten System (30), welches periodisch mit dem Endgerät (20) verbunden werden kann, wobei in dem Verfahren:
- das Endgerät (20) an die Karte einen Parameter (M) überträgt, der zumindest den Betrag (m) der Transaktion aufweist,
- das Saldo der Karte (10) mit dem Betrag (m) belastet wird,
- die Karte (10) und das Endgerät (20) verschiedene Daten berechnen und austauschen, von denen bestimmte durch die Karte mittels eines Algorithmus mit öffentlichem Schlüssel oder Geheimschlüssel signiert sind,
- das Endgerät (20) die durch den Algorithmus mit öffentlichem Schlüssel oder Geheimschlüssel signierten Daten überprüft und die den verschiedenen durchge-führten Transaktionen eigenen Parameter speichert,
- das zentralisierte System (30) periodisch die gespeicherten Daten sammelt, wenn es mit dem Endgerät verbunden ist, und dem Dienstleister die entsprechenden Beträge gutschreibt,
wobei dieses Verfahren **dadurch gekennzeichnet ist, dass** es eine doppelte Signatur aufweist, wobei die von der Karte (10) mit Hilfe des Algorithmus mit öffentlichem Schlüssel oder Geheimschlüssel signierten Daten einen Nachweis z umfassen, dass die Belastung der Karte ausgeführt wurde, wobei dieser Nachweis z eine Funktion f (k, M) des Parameters M und eines Belastungs-Geheimschlüssels k ist, das Endgerät (20) auf diese Weise außerdem die verschiedenen Nachweise z der diversen durchgeführten Transaktionen speichert, diese Nachweise z jedoch nicht überprüfen kann, und das zentralisierte System (30) außerdem diese Nachweise z sammelt und sie mit Hilfe des Belastungs-Geheimschlüssels überprüft und dem Dienstleister (20) nur im Fall einer positiven Überprüfung eine Gutschrift zukommen lässt.

2. Verfahren nach Anspruch 1, **dadurch gekennzeichnet, dass** eine der Signaturen, die es verwendet, eine Signatur vom RSA-Typ ist, und dadurch, dass die Karte (10) ein Echtheitszertifikat cer der Parameter (n, e) des öffentlichen Schlüs-sels p und der Identität i der Karte besitzt und die. Signatur y = s(M,z) berechnet und dem Endgerät (20) das Zertifikat cer, die Signatur y und den Nachweis z übermittelt, wobei der Dienstleister cer und y überprüft, i, M und z speichert, und das zentralisierte System die Nachweise z überprüft.

3. Verfahren nach Anspruch 1, **dadurch gekennzeichnet, dass** eine der Signaturen, die es verwendet, eine interaktive Signatur ist, und dass es die folgenden Vorgänge umfasst :
- die Karte (10) besitzt ein Echtheitszertifikat cer der Parameter (n,e) des öffentlichen Schlüssels und der Identität i der Karte, wählt eine Zufallsgröße x aus, berechnet t = x^{e} mod n, wobei e und n den öffentlichen Schlüssel p definieren, berechnet den Nachweis z = f(k,M) mit Hilfe des Belastungs-Geheimschlüssels k, berechnet b = h(t*,M,z), wobei h eine Hashing-Funktion ist, t* eine Einschränkung von t auf Bits mit schwacher Gewichtung ist, und übermittelt dem Endgerät (20) den Nachweis z, die Zahl b und das Zertifikat cer,
- das Endgerät (20) überprüft das Zertifikat cer mit Hilfe des öffentlichen Schlüssels der Echtheit PA und erhält n, e und i, generiert daraus eine Zufallszahl c mit einer bestimmten Länge und übermittelt c der Karte (10),
- die Karte (10) berechnet y = xv^{c} mod n oder v = 1/I^{1/e} mod n und I = g (i) und übermittelt y an das Endgerät (20),
- das Endgerät berechnet I = g (i), wobei g eine Erweiterungsfunktion ist, berechnet die Menge u = (y^{e}I^{c} mod n)*, überprüft, ob b = h (u, M, z) ist, und speichert i, M und z,
- das zentralisierte System überprüft die Nachweise z.

4. Verfahren nach Anspruch 3, **dadurch gekennzeichnet, dass** das Sicherheitsniveau der ersten Signatur durch Variieren der Länge der Zufallszahl c angepasst bzw. eingestellt wird.

## Claims

1. Procedure for performing an electronic transaction between a user possessing a card (10), a service provider possessing a terminal (20) capable of accepting said card (10), and a centralized system (30) capable of being periodically connected to the terminal (20), wherein:
- the terminal (20) transmits a parameter (M) comprising at least the sum (m) of the transaction to the card,
- the card (10) debits the said sum from this balance (m),
- the card (10) and the terminal (20) calculate and exchange various data, certain of which are signed by the card by means of a public or secret algorithm,
- the terminal (20) checks the data signed by the said public or secret algorithm and stores the individual parameters of the various transactions effected,
- the centralized system (30) periodically collects the stored data when it is connected to the terminal and credits the service provider with the corresponding amounts,
said procedure being **characterized by** the fact that it is a dual signature procedure, the data being signed by the card (10) by means of the public or secret algorithm comprising a proof z that the card has been debited, said proof z being a function f(k,M) of the parameter M and of a secret debit key (K), the terminal (20) thereby also storing the different proofs z of the transactions effected without being able to check said proofs (Z), the centralized system (30) also collecting said proofs (Z), the centralized system (30) also collecting said proofs (Z) and checking them using the secret debit key (K) and only crediting the service provider (20) on condition the checking operation is positive.

2. Procedure of claim 1, **characterized by** the fact that one of the signatures used is an RSA-type signature and by the fact that the card (10) possesses a certificate cer from the authority for the parameters (n,e) of the public key p and for the identity i of the card, and calculates the signature y=s(M,z) and transmits certificates cer, signature y and proof z to the terminal (20), the service provider checking cer and y, storing i, M and z and the centralized system checking the proofs z.

3. Procedure of claim 1, **characterized by** the fact that one of the signatures used is an interactive signature, and that it comprises the following operations:
- card (10) contains an authorization certificate cer for the parameters (n,e) of the public key and the identity i of the card, selects a random number x, calculates t=x^{e} mod n, where e and n define public key p, calculates the proof z=f(k,M) using the secret debit key k, calculates b=h(t*,M,z) where h is a hashing function and t* restricts t to low-order bits, and transmits proof z, number b and certificate cer to the terminal (20),
- the terminal (20) checks certificate cer using the public key of the authority P_{A} to obtain n, e and i, selects a random number c having a certain length, and transmits c to the card (10),
- the card (10) calculates y=xv^{c} mod n where V = 1/I^{1/e} mod n and I = g(i) and transmits y to terminal (20),
- the terminal calculates I=g(i), where g is an expansion function, calculates the quantity u=(y^{e}I^{c} mod n)*, checks that b=h(u,M,z) and stores i, M and z,
- the centralized system checks the proofs (z).

4. Procedure of claim 3, **characterized by** the fact that the level of security of the first signature is modified by varying the length of the random number c.
